# EUROPÄISCHE PATENTANMELDUNG

(11) **EP 0 899 048 A1**
(43) Veröffentlichungstag der Anmeldung: **03.03.1999**
(21) Anmeldenummer: 98115219.2
(22) Anmeldetag: 13.08.1998
(51) Int. Cl.: B23K 11/00, B23K 11/30, E04B 1/41

(54) **Vorrichtung zum Widerstandsschweissen von U-förmigen-Profilen mit stangenförmigen Profilen**

(30) Priorität: 27.08.1997 DE 19737246
(71) Anmelder: Messer Griesheim Schweisstechnik GmbH + Co., D-64823 Gross-Umstadt (DE)
(72) Erfinder: Liebske, Roland, 12247 Berlin (DE); Dietz, Dietmar, 13435 Berlin (DE); Gerstner, Lothar, 13088 Berlin (DE)
(74) Vertreter: Berdux, Klaus, Dipl.-Ing.

(57) **Zusammenfassung**

Um Profile mit unterschiedlichen Querschnitten für Deckenkonstruktionen zu verbinden, wird gemäß der Erfindung eine Vorrichtung zum Widerstandspreßschweißen von U-förmigen Profilen (10, 16) mit stangenförmigen Profilen (11, 12; 24, 23, 25), wie geschlossenen Bügeln, Nägeln oder dgl., mit einer ersten Elektrode (34) mit einer Werkstückeingriffsfläche (45) und einer zweiten Elektrode (35) mit einer Werkstückeingriffsfläche (46) die über einen ersten und zweiten Anschluß (47, 48) mit zwei in einer Reihe geschalteten Transformatoren 1000 Hz (49, 50) verbunden und zwischen denen zwei stangenförmige Profile so angeordnet sind, daß jeweils die stangenförmigen Profile unter einem vorgegebenen Winkel (39) jeweils einen Schenkel (19, 20; 17, 18) des U-förmigen Profils kontaktieren und die Gleichstromquelle (79, 38, 49, 50) einen zum Erwärmen der Elektroden verwendeten Gleichstrom kurzzeitig einem Schaltkreis zuführt, der mindestens einen Weg hat, der durch den ersten Anschluß (47), die erste Elektrode (34), das erste stangenförmige Profil (11, 24), den ersten Schenkel (19, 18) des U-förmigen Profils, den Boden (21; 22) des U-förmigen Profils, den zweiten Schenkel (20, 17) des U-förmigen Profils, das zweite stangenförmige Profil (12; 25), die zweite Elektrode (35) und den zweiten Anschluß (48) führt, vorgeschlagen.

## Beschreibung

Beim Widerstandspreßschweißen wird die Wärme für den Schweißpunkt durch gleichzeitige Einwirkung eines elektrischen Stromes und der Elektrodenkraft sowie den elektrischen Widerstand der zu verschweißenden Werkstoffe im Bereich der Berührungsstelle der Elektroden erzeugt. Die Teile liegen aufeinander und werden durch die Elektrodenkratt unter örtlichem Druck in einzelnen Punkten geschweißt. Der Strom und die Elektrodenkraft werden über die Elektroden zugeführt.

Das Verfahren wird hauptsächlich in der blechverarbeitenden Industrie angewendet, zum Beispiel bei der Herstellung von Haushaltsgeräten oder im Fahrzeugbau.

Der Erfindung liegt die Aufgabe zugrunde, Profile mit unterschiedlichen Querschnitten für Deckenkonstruktionen mit stangenförmigen Profilen zu verbinden.

Die hierbei zu lösenden Probleme bestehen unter anderem darin, daß die für Deckenkonstruktionen verwendeten U-Profile eine wärmeempfindliche Einlage, z.B. aus Styropor, enthalten, so daß keine direkte Gegenelektrode die Schenkelinnenseite des U-Profils kontaktieren kann. Dabei muß eine unzulässige Erwärmung der Einlage, die bei bestimmungsgemäßer Verwendung der Deckenkonstruktion ein Eindringen von Beton verhindern soll, vermieden werden. Im Gegensatz zu dieser Forderung nach geringer Wärmeeinbringung müssen zur Kompensation der durch die hochohmigen U-Profile und durch den Nebenschluß beim Einsatz geschlossener Bügel hohen Stromverluste hohe Ströme fließen. Weiterhin sind unterschiedliche Beschichtungen und Querschnitte der Profile zu berücksichtigen, welche voneinander abweichende Schichtdicken aufweisen. Relativ starkes Rußen der aufdampfenden Beschichtungen, wie z. B. bei Zinkschichten, führt zur Verschmutzung der Profile und der Elektroden. Die stangenförmigen Profile müssen unter einem vorgegebenen Winkel an den U-Profilen befestigt werden.

Erfindungsgemäß wird dies mit einer Vorrichtung zum Widerstandspreßschweißen von U-förmigen Profilen mit stangenförmigen Profilen, wie geschlossenen Bügeln, Nägeln oder dergleichen, mit einer ersten Elektrode mit einer Werkstückeingriffsfläche, und einer zweiten Elektrode mit einer Werkstückeingriffsfläche die über einen ersten und zweiten Anschluß mit einer Gleichstromquelle verbunden und zwischen denen zwei stangenförmige Profile so angeordnet sind, daß die stangenförmigen Profile unter einem vorgegebenen Winkel jeweils einen Schenke des U-förmigen Profils kontaktieren und die Gleichstromquelle einen zum Erwärmen der Elektroden verwendeten Gleichstrom kurzzeitig einem Schaltkreis zuführt, der mindestens einen Weg hat, der durch den ersten Anschluß, die erste Elektrode, das erste stangenförmige Profil, den ersten Steg des U-förmigen Profils, den Boden des U-förmigen Profils, den zweiten Steg des U-förmigen Profils, das zweite stangenförmige Profil, die zweite Elektrode und den zweiten Anschluß führt, erreicht.

Vorteilhafte Weiterbildungen der Erfindung sind in den Unteransprüchen angegeben.

Ein Ausführungsbeispiel der Erfindung ist dadurch gekennzeichnet, daß die Gleichstromquelle einen zum Erwärmen der Elektroden verwendeten Gleichstrom kuzzeitig einem Schaltkreis zuführt, der einen zweiten Weg hat, der durch den ersten Anschluß, die erste Elektrode, das erste stangenförmige Profil, den Bügel, das zweite stangenförmige Profil, die zweite Elektrode und den zweiten Anschluß führt.

Ein weiteres Ausführungsbeispiel der Erfindung ist dadurch gekennzeichnet, daß die Elektroden an Schweißführungsköpfen befestigt sind, die jeweils auf der linken und rechten Seite der Schenkel angeordnet sind.

Ein weiteres Ausführungsbeispiel der Erfindung ist dadurch gekennzeichnet, daß die Schweißköpfe Antriebseinheiten zum automatischen Aus- und Einfahren der Elektroden aufweisen.

Ein weiteres Ausführungsbeispiel der Erfindung ist dadurch gekennzeichnet, daß die Antriebseinheiten mit einer pneumatischen Steuerung verbunden sind.

Ein weiteres Ausführungsbeispiel der Erfindung ist dadurch gekennzeichnet, daß die Gleichstromquelle einen zum Erwärmen der Elektroden verwendeten Gleichstrom während einer Zeitspanne zwischen 140 und 180 ms dem Schaltkreis zuführt.

Ein weiteres Ausführungsbeispiel der Erfindung ist dadurch gekennzeichnet, daß die Gleichstromquelle einen zum Erwärmen der Elektroden verwendeten Gleichstrom während einer Zeitspanne von ca. 160 ms dem Schaltkreis zuführt.

Ein weiteres Ausführungsbeispiel der Erfindung ist dadurch gekennzeichnet, daß daß die Gleichstromquelle einen zum Erwärmen der Elektroden verwendeten Gleichstrom mit 16 bis 20 Volt und 10000 bis 17000 A dem Schaltkreis zuführt.

Ein weiteres Ausführungsbeispiel der Erfindung ist dadurch gekennzeichnet, daß die Gleichstromquelle zwei in Reihe geschaltete Transformatoren mit Stromregelung und Druckregelung der Führungsköpfe aufweist.

Ein weiteres Ausführungsbeispiel der Erfindung ist dadurch gekennzeichnet, daß den Elektroden angetriebene Reinigungsmittel, wie Bürsten, zugeordnet sind, die unterhalb der Traverse angeordnet sind und in die Werkstückeingriffsflächen einfahrbar sind.

Ein weiteres Ausführungsbeispiel der Erfindung ist durch ein Verfahren zum Befestigen von zwei stangenförmigen Profilen an jeweils einem Schenkel eines U-förmigen Profils durch eine Reihen-Widerstanspreßschweißung gekennzeichnet.

Ein weiteres Ausführungsbeispiel der Erfindung ist durch ein U-förmiges Profil mit an den Schenkeln befestigten stangenförmigen Profilen durch Schweißstellen zwischen dem U-förmigen Profil und den stangenförmigen Profilen gekennzeichnet.

Mit der erfindungsgemäßen Vorrichtung werden die zuvor beschriebenen Probleme durch gleichzeitiges Widerstandspreßschweißen von zwei stangenförmigen Profilen an beiden Außenflächen der Schenkel des U-Profils vorteilhaft gelöst. Dies wird durch den Aufbau mit zwei Führungsköpfen erreicht, welche durch zwei verfahrbare Elektroden gekennzeichnet sind, deren Elektrodenkraft durch pneumatische Antriebseinheiten aufgebracht wird. Durch die Reihenschweißung der beiden Verbindungsstellen zwischen den beiden Außenschenkeln jedes U-förmigen Profils und den jedem Außenschenkel zugeordneten stangenförmigen Profilen wird die wärmeempfindliche Einlage durch keine mechanischen Teile der Vorrichtung, wie sie z.B. Gegenelektroden darstellen, beschädigt. Dabei weist der Schaltkreis mindestens einen Weg auf, durch den ein Schweißstrom zwischen 10000 und 17000 Ampere bei kurzen Stromzeiten zwischen 120 und 180 ms und Schweißdrücken von 180 bis 300 Kp fließt, wobei eine unzulässige Erwärmung der Einlage vermieden wird. Durch eine Sekundärspannung von ca. 18V und einer Leistungsreserve von ca 25% der einen geregelten Gleichstrom erzeugenden dreiphasigen Schweißtransformatoren können die durch das hochohmige U-Profil und/oder durch den Nebenschluß bei geschlossenen Bügeln entstehenden Stromverluste kompensiert werden.

Die stangenförmigen Profile werden unter einem Winkel von < 45°, vorzugsweise zwischen 1 und 9°, zu den Außenschenkeln durch Lage der Schweißstellen in den Auslauf der Radien am Übergang der Außenschenkel zum Boden der U-Profile angeordnet und ggf. in Abhängigkeit von dem ausgewählten Winkel zusätzlich durch Schrägstellung der Führungsköpfe mit den Elektroden eingestellt.

Vor dem und bei dem Schweißen der Profile sind die als Nägel mit oder ohne Kopf ausgebildeten stangenförmigen Profile über nicht näher dargestellte Zuführvorrichtungen in einer Halterung so angeordnet, daß sie in vorgegebener Lage zum U-Profil positioniert sind. Über den Abstand der Nägel zu der Außenfläche der Schenkel stellt sich beim Schweißen der Winkel zur Außenfläche der Schenkel selbsttätig ein, indem die stangenförmigen Profile am Anschweißende von den ausfahrenden Elektroden gegen die Außenfläche der Schenke der U-Profie gedrückt werden.

Durch die Auswahl des Widerstandspreßschweißverfahrens zum Verbinden des U-Profils mit den stangenförmigen Profilen ergeben sich bei schwenkenden Beschichtungsdicken, zum Beispiel bei einer Zinkschicht, in Bereichen von mehreren 10 µm Zinkschichtdickenschwenkungen, keine Probleme. Die Schweißung bleibt in Festigkeit und optischer Qualität stabil, da durch das gewählte Schweißverfahren erreicht wird, daß eine gewisse Bandbreite der vorgenannten Abweichungen mit einem gewählten Parametersatz zu schweißen ist.

Die erfindungsgemäße Vorrichtung weist Bürstensysteme auf, die regelmäßig die Verbindungsstellen und/oder die Elektroden reinigen. Durch eine Kühlung der Elektroden und ggf. weiterer Komponenten wird die Elektrodenstandzeit erhöht, da die Verschmutzung der Profile und der Elektroden durch relativ starkes Rußen der aufdampfenden Zinkschicht beseitigt wird. Vorzugsweise werden die Zinkdämpfe mit einer Absaugeinrichtung von der Schweißstelle entfernt.

Ein Ausführungsbeispiel der Erfindung ist in der Zeichnung dargestellt und wird im folgenden näher beschrieben:

Es zeigen
- Figur 1: der prinzipielle Aufbau der Vorrichtung mit den Führungsköpfen und der Traverse
- Figur 2: die Vorrichtung mit den Elektroden und den Profilen
- Figur 3: die Vorrichtung mit den Bürstensystemen
- Figur 4: ein U-Profil mit zwei Nägeln
- Figur 5: ein U-Profil mit einem geschlossenen Bügel

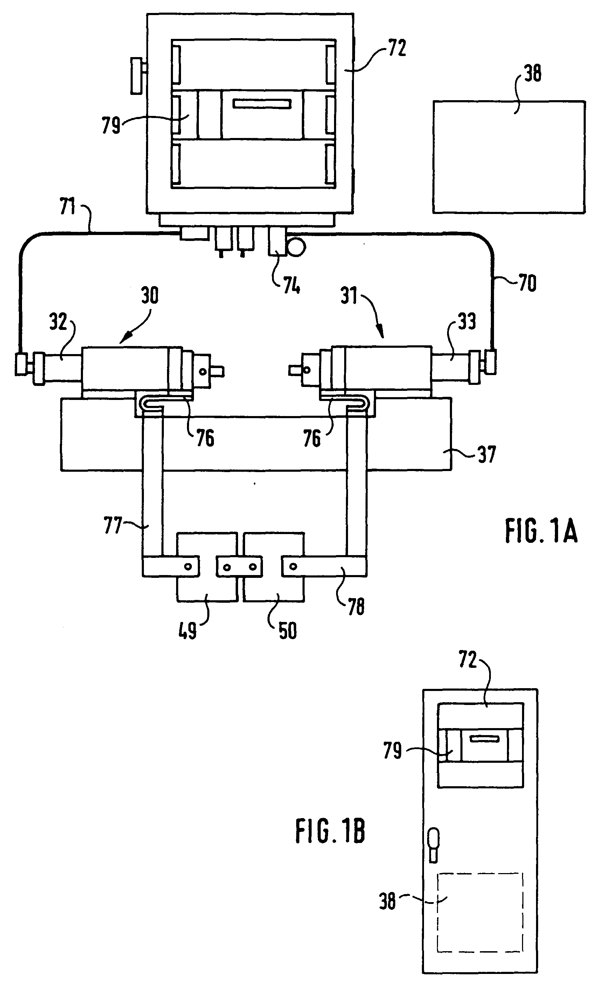

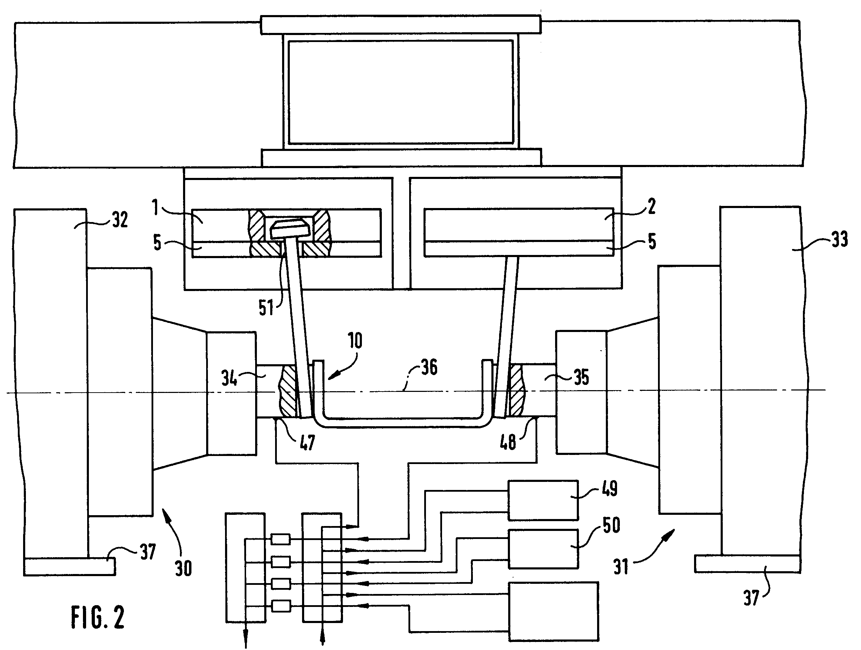

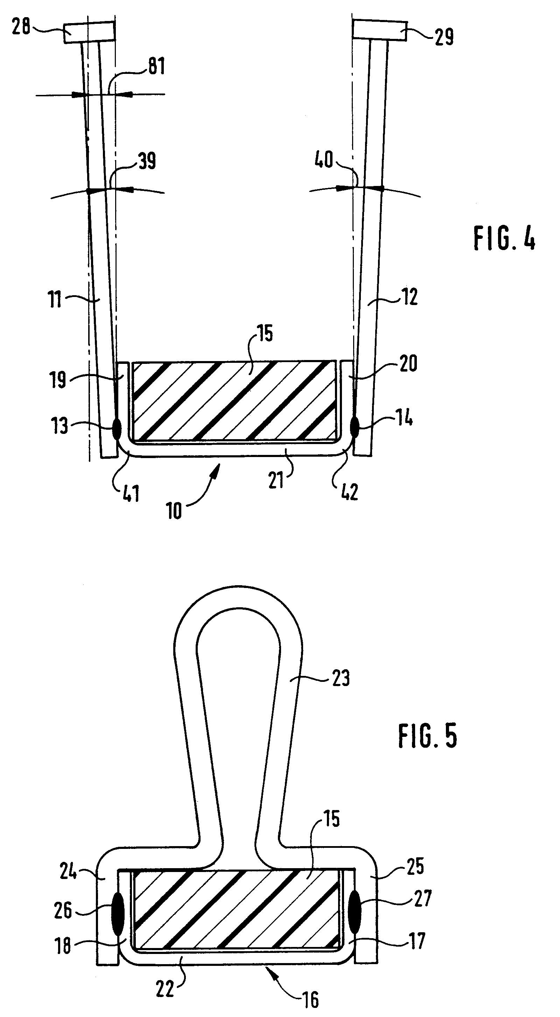

Mit der nur schematisch dargestellen Vorrichtung gemäß den Figuren 1 bis 3 werden Profile mit unterschiedlichen Querschnitten für Deckenkonstruktionen geschweißt. Figur 4 zeigt ein U-Profil 10 an das mit der erfindungsgemäßen Vorrichtung Nägel 11 und 12 paarweise an die Außenseite der Schenkel 19, 20 mittels einer Widerstandspreß-/Buckelschweißung geschweißt sind. Die als Schweißpunkte bzw. -linsen ausgebildeten Schweißstellen sind mit 13 und 14 bezeichnet. Das U-Profil ist mit einer Einlage 15 aus Styropor versehen, die den Zwischenraum zwischen den Schenkeln 19, 20 und dem Boden 21 des U-Profils ausfüllt.

Figur 5 zeigt ein U-Profil 16 dessen Schenkel 17, 18 an der dem Boden 22 gegenüberliegenden Seite von einem geschlossenen Bügel 23 umgriffen ist. Der Bügel 23 wird mit beiden Anschweißenden mit den Schenkeln 17, 18 durch eine Widerstandspreß-/Buckelschweißung verbunden. Die Schweißpunkte bzw. -linsen sind mit 26 und 27 bezeichnet. Die Nägel 11, 12 oder Bügel 23 bestehen aus Edelstahl (V4A), aus galvanisch verzinktem ST37-2 oder feuerverzinktem ST37-2, wobei die U-Profile 10 bzw.16 jeweils aus dem gleichen Werkstoff, das mit der gleichen Beschichtung wie die stangenförmigen Profile versehen ist, bestehen. Die Zinkschichtdicke liegt bei 150 µm, mit Unterschieden in der Schichtdicke von einigen 10µm. Die Nägel 11 und 12 haben unterschiedliche Druchmesser zum Beispiel von 5 oder 6 mm, mit einer Länge bis 58 mm. Sie sind mit und ohne Kopf 28, 29 ausgebildet.

Die U-Profile 10, 16 weisen eine Länge von maximal 3000 mm auf mit variierenden Breiten, Schenkelhöhen und Schenkeldicken. Der Schweißstellenabstand beträgt entlang der U-Profillänge 150 bis 475 mm.

Die Bügel 23 haben einen unterschiedliche Druchmesser, z.B. zwischen 5 und 6 mm, bei einer Höhe bis ca. 100 mm und unterschiedlichen Formen.

Die Vorrichtung besteht im wesentlichen aus zwei Schweiß-Führungsköpfen 30, 31 welche pneumatische Antriebseinheiten 32, 33 aufweisen, an denen die Elektroden 34, 35 befestigt sind. Über die paarweise ausgeführten Leitungen 70, 71 sind die als doppelwirkende Luftzylinder ausgebildeten Antriebseinheiten mit der Luftarmatur 74 verbunden. Die Strom- und Pneumatiksteuerung ist mit 72, 79 bezeichnet. Die Führungsköpfe 30, 31 sind auf der Traverse 37 befestigt, die so konzipiert sind, daß die entstehenden Schweißkräfte kein Aufbiegen oder Verwinden der gesamten Vorrichtung verursachen. Die Traverse kann auch als nach oben offenes C-Gestell aufgebaut werden. Unter der Traverse 37, auf der die Führungsköpfe 30, 31 befestigt sind, sind zwei in Reihe geschaltete Mittelfrequenztransformatoren 49, 50 (Invertertechnik 1000 Hz) angeordnet, die jeweils über wassergekühlte Sekundär-Cu-Profile 77, 78 und als Strombänder ausgebildete Anschlüsse 47, 48 an die Führungsköpfe angeschlossen sind. In die der Transformatorengruppe 49, 50 zugeordnete Schweißstromsteuerung 79 ist ein Strommeß- und Überwachungsgerät integriert, das eine Toroidspule mit Innendurchmesser 70mm aufweist über die der Schweißstrom gemessen, überwacht und geregelt werden kann. Die Elektroden sind aus CuCrZr (Elektrodenklasse 2) mit einer als Prisma von ca. 90° angearbeiteten Werkstückeingrifffläche 45, 46, worin die unterschiedlichen Nägel 11, 12 und Bügel 23 mit ihren unterschiedlichen Durchmessern aufgenommen werden können. Die Führungsköpfe 30, 31 mit den Elektroden 34, 35 sind auf einer Achse 36 liegend jeweils auf der linken und rechten Seite der Schenkel 17, 18, 19, 20 der U-Profile 10, 16 angeordnet.

Die U-Profile werden mittels nicht näher dargestellten Winkelprofilen seitlich geführt und mittels Pneumatikspanneinrichtungen seitlich gespannt. Die nicht näher dargestellten Führungs- und die Spannsysteme der U-Profile 10, 16 nehmen für den Havariefall die Schweißkraft eines Schweißführungskopfes 30, 31 auf.

Alle Zuführsysteme für Nägel 11, 12 und Bügel 23 und die der U-Profile 10, 16 sind durch nicht näher dargestellte Hartgewebeunterlagen, Hülsen und Scheiben isoliert aufgebaut, damit keine zusätzlichen Nebenschlüsse entstehen und damit die Reproduzierbarkeit der Schweißverbindungen beeinträchtigen.

Die Schweißführungsköpfe 30, 31 werden gleichzeitig mit einer geregelten Schließkraft zum schlagfreien Kontaktieren der Elektroden 34, 35 auf die Nägel 11, 12 bzw. Bügel 23 pneumatisch beaufschlagt. Danach wird, zeitlich gesteuert, auf eine Schweißkraft von ca. 2,3 bis 4,0 KN umgeschaltet. Die aufzubringende Schweißkraft richtet sich hierbei nach der Ausbildung der Nägel 11, 12 bzw. Bügel 23, nach dem Material und den Abmaßen. Die Nägel 11, 12 und Bügel 23 werden durch die Schweißkraft an die Schenke 19, 20 der U-Profile 10, 16 angepaßt, da insbesondere die Bügel 23 eine mechanische Vorspannung zum Einlegen benötigen.

Die Nägel 11, 12 werden unter einem Winkel 39, 40 zwischen 5 und 5,7° zu den Schenkeln 19, 20 der U-Profile 10 angeordnet. Dabei ist der Winkel 39, 40 durch die Lage der Schweißstellen 13, 14 im Auslauf der Radien 41, 42 der U-Profile 10 und dem Abstand 81 von den Schenkeln 17, 18 vorgegeben. Die Nägel 11, 12 werden mittels den Halterungen 1, 2 an der entgegengesetzten Seite zu den Schweißstellen 13, 14 in Öffnungen 41 gehalten. Die Öffnungen 51 sind in Halteplatten 5 angeordnet.

Durch eine zusätzliche Schrägstellung jedes Führungskopfes 30 oder 31 kann der Winkel 39, 40 in größeren Bereichen festgelegt werden. Dies ist aber dann nicht erforderlich, wenn sich durch die Schrägstellung der Profilschenkel und durch den Radiusauslauf ein Winkel im gewünschten Bereich einstellt.

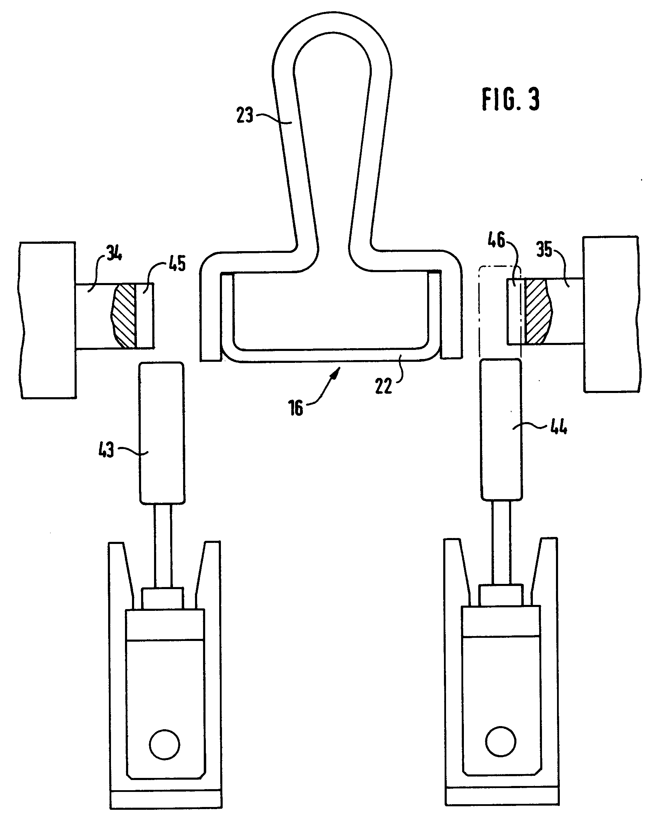

In Figur 3 sind gleiche Bauteile mit gleichen Bezugsziffern versehen. Zwischen den Elektroden 34, 35 ist ein U-Profil 16 mit einem Bügel 23 dargestellt, der durch nicht näher dargestellte Klemmbacken über den ganzen oberen Bügelbereich gehalten ist. In der Figur 3 sind rotierende oder auf- und abwärts bewegte Messing- oder Bronze-Bürstensysteme 43, 44 schematisch dargestellt, die die Werkstückeingriffsflächen 45, 46 der Elektroden 34, 35 nach empirisch ermittelten Zyklen reinigen. Entsprechend werden Verunreinigungen an den Prismenelektroden 34, 35 durch nachträgliches Bürsten beseitigt. Die Verunreinigungen an den Schweißstellen werden durch nachträgliches Bürsten reduziert (der Schweißstation nachgeschaltet).

Die Elektroden 34, 35 sind über einen ersten Anschluß 47 und einen zweiten Anschluß 48 mit zwei Mittelfrequenz-Transformatoren (1000 Hz) 49, 50 verbunden, die in Reihe geschaltet sind. Mittels einer Umrichter-Leistungsstufe 38 wird der über die Schweißsteuerung 79 vorgegebene Schweißstrom in vorgegebener Stromzeit geregelt auf die Mittelfrequenzstromformatoren 49, 50 aufgeschaltet. Die Umrichter-Leistungsstufe 38 kann separat zu der Schweißsteuerung 79 wie in Figur 1a dargestellt oder zusammen mit der Schweißstromsteuerung 79 in einem 19" Schrank angeordnet sein.

Mittels der in Reihe geschalteten Transformatoren fließt ein geregelter Gleichstrom mit einer überlagerten Frequenz von 1000 Hz durch mindestens einen Stromweg. Beim Schweißen der Nägel ergibt sich der folgende Stromweg:

### Stromweg Nagel:

◆ von dem Schweißtransformatoren 49, 50 über die Sekundärprofile 77 zum Anschluß 47
◆ vom Anschluß 47 zum Führungskopf 30
◆ vom Führungskopf 30 über Elektrode 34 über Nagel 11
◆ vom Nagel 11 über Schenkelseite 19 des U-Profils 10
◆ von Schenkelseite 19 über Boden 21 des U-Profils 10
◆ vom Boden 21 des U-Profils 10 zur Schenkelseite 20
◆ von Schenkelseite 20 über Nagel 12
◆ vom Nagel 12 über Elektrode 35 über Führungskopf 31
◆ vom Führungskopf 31 über Anschluß 48 und über die Sekundärprofile 78 zu den Schweißtransformatoren 49, 50

### Beim Schweißen der Bügel ergeben sich folgende Stromwege:

### Stromweg Bügel:

◆ von den Schweißtransformatoren 49, 50 über die Sekundärprofile 77 über Anschluß 47 über Führungskopf 30
◆ vom Führungskopf 30 über Elektrode 34 über Bügelseite 24
◆ von Bügelseite 24 zwei Wege a. und b. parallel
   **a.**
      ◆ von Bügelseite 24 über den Bügel 23 zur Bügelseite 25
      ◆ von Bügelseite 25 über die Elektrode 35 und Führungskopf 31
      ◆ vom Führungskopf 31 über die Sekundärprofile 78 zu dem Schweißtransformatoren 49, 50
   **b.**
      ◆ von Bügelseite 24 über Schenkelseite 18 des U-Profils 16
      ◆ von Schenkelseite 18 über Boden 22 des U-Profils 16
      ◆ vom Boden 22 des U-Profils 16 zur Schenkelseite 17
      ◆ von Schenkelseite 17 über Bügelseite 25
      ◆ von Bügelseite 25 über Elektrode 35 über Führungskopf 31
      ◆ vom Führungskopf 31 über Anschluß 48 über die Sekundärprofile 78 zu dem Schweißtransformator 49, 50

## Patentansprüche

1. Vorrichtung zum Widerstandspreßschweißen von U-förmigen Profilen (10, 16) mit stangenförmigen Profilen (11, 12; 24, 23, 25), wie geschlossenen Bügeln, Nägeln oder dgl., mit einer ersten Elektrode (34) mit einer Werkstückeingriffsfläche (45) und einer zweiten Elektrode (35) mit einer Werkstückeingriffsfläche (46) die über einen ersten und zweiten Anschluß (47, 48) mit einer Gleichstromquelle (49, 50) verbunden und zwischen denen zwei stangenförmige Profile so angeordnet sind, daß jeweils die stangenförmigen Profile unter einem vorgegebenen Winkel (39) jeweils einen Schenkel (19, 20; 17, 18) des U-förmigen Profils kontaktieren und die Gleichstromquelle (49, 50) einen zum Erwärmen der Elektroden verwendeten Gleichstrom kurzzeitig einem Schaltkreis zuführt, der mindestens einen Weg hat, der durch den ersten Anschluß (47), die erste Elektrode (34), das erste stangenförmige Profil (11, 24), den ersten Schenkel (19; 18) des U-förmigen Profils, den Boden (21; 22) des U-förmigen Profils, den zweiten Schenkel (20, 17) des U-förmigen Profils, das zweite stangenförmige Profil (12; 25), die zweite Elektrode (35) und den zweiten Anschluß (48)führt.

2. Vorrichtung nach Anspruch 1, dadurch gekennzeichnet, daß die Gleichstromquelle (49, 50) einen zum Erwärmen der Elektroden (34, 35) verwendeten Gleichstrom kuzzeitig einem Schaltkreis zuführt, der einen zweiten Weg hat, der durch den ersten Anschluß (47), die erste Elektrode (34), das erste stangenförmige Profil (24), den Bügel (23), das zweite stangenförmige Profil (25), die zweite Elektrode (35) und den zweiten Anschluß (48) führt.

3. Vorrichtung nach Anspruch 1 oder 2,
dadurch gekennzeichnet,
daß die Elektroden (34, 35) an Schweißführungsköpfen (30, 31) befestigt sind, die jeweils auf der linken und rechten Seite der Schenke (19, 20; 18, 17) angeordnet sind.

4. Vorrichtung nach Anspruch 2 oder 3,
dadurch gekennzeichnet,
daß die Schweißköpfe Antriebseinheiten (32, 33) zum automatischen Aus- und Einfahren der Elektroden aufweisen.

5. Vorrichtung nach Anspruch 4,
dadurch gekennzeichnet,
daß die Antriebseinheiten (32, 33) mit einer pneumatischen Steuerung (72) verbunden sind.

6. Vorrichtung nach einem der Ansprüche 1 bis 5 dadurch gekennzeichnet, daß die Gleichstromquelle (79, 38, 49, 50) einen zum Erwärmen der Elektroden (34, 35) verwendeten Gleichstrom während einer Zeitspanne zwischen 80 und 180 ms dem Schaltkreis zuführt.

7. Vorrichtung nach Anspruch 6, dadurch gekennzeichnet, daß die Gleichstromquelle (79, 38, 49, 50) einen zum Erwärmen der Elektroden (34, 35) verwendeten Gleichstrom während einer Zeitspanne von ca. 160 ms dem Schaltkreis zuführt.

8. Vorrichtung nach einem der Ansprüche 1 bis 7, dadurch gekennzeichnet, daß die Gleichstromquelle (79, 38, 49, 50) einen zum Erwärmen der Elektroden (34, 35) verwendeten Gleichstrom mit 16 bis 20 Volt und 10000 bis 17000 A dem Schaltkreis zuführt.

9. Vorrichtung nach einem der Ansprüche 1bis 8, dadurch gekennzeichnet, daß die Gleichstromquelle (79, 38, 49, 50) zwei in Reihe geschaltete Transformatoren aufweist.

10. Vorrichtung nach einem der Ansprüche 1 bis 9 dadurch gekennzeichnet daß den Elektroden (34, 35) angetriebene Reinigungsmittel (43, 44), wie Bürsten, zugeordnet sind, die unterhalb oder innerhalb der Traverse (37) angeordnet sind und in die Werkstückeingriffsflächen (45, 46) einfahrbar sind.

11. Verfahren zum Befestigen von zwei stangenförmigen Profilen (11, 12; 24, 25) an jeweils einem Schenkel (17, 18; 19, 20) eines U-förmigen Profils (10, 16) gekennzeichnet durch eine Reihen-Widerstanspreßschweißung.
